# EUROPEAN PATENT APPLICATION

(11) **EP 2 058 978 A1**
(43) Date of publication of application: **13.05.2009**
(21) Application number: 07721693.5
(22) Date of filing: 31.05.2007
(51) Int. Cl.: H04L 12/26

(54) **METHOD AND SYSTEM OF MPLS MULTICAST NODE AND FAULT LOCATION**

(30) Priority: 30.08.2006 CN 200610112209
(71) Applicant: Huawei Technologies Co., Ltd., Longgang District, Shenzhen Guangdong 518129 (CN)
(72) Inventor: HE, Jia, Shenzhen, Guangdong 518129 (CN); ZHANG, Haiyan, Shenzhen, Guangdong 518129 (CN)
(74) Representative: Thun, Clemens
(86) International application number: PCT/CN2007/070070
(87) International publication number: WO 2008/028413

(57) **Abstract**

A multicast MPLS networks node in network communication field and a method and a system for fault localization are provided. The method includes a step that a leaf node judges the connectivity of a multicast path; a root node generates a fault localization message to perform fault localization for a fault branch after learning the branch where the fault is located in accordance with the judgment result of the leaf node. An embodiment of the present invention further provides a fault localization system for Multicast MPLS networks, which includes a connectivity checking module, a root node learning module, a node reply module and a fault localization module. The technical solution in the embodiment of the present invention restrains unnecessary message, reduces redundant information, and improves network efficiency by carrying the information of the fault branch in the fault localization message to perform fault localization only for the fault branch.

## Description

### FIELD OF THE TECHNOLOGY

The present invention relates to network communication field, particularly to a node, method and system of fault localization in Multicast MPLS networks.

### BACKGROUND

The application of MPLS (Multi-Protocol Label Switching) multicast is attracting more and more attention. In order to ensure the Multicast MPLS networks to provide reliable service for subscribers, it's needed to perform effective administration including fault administration for the multicast.

In MPLS unicast, the connectivity is checked by periodically sending a CV (Connectivity Verification) message, where the format of the CV message is as shown in Table 1. The Function type represents the type of the OAM with 1 byte. The value of the Function type is 01 (hex) in terms of the CV message. The Reserved is a reserved field with 3 bytes which are all 0 here. The LSP Trail Termination Source Identifier represents an ingress identifier of an LSP (Label Switched Path) and is jointly represented by an LSP identifier and an LSR (Label Switching Router) identifier with 20 bytes. The Padding is for padding use with 18 bytes which are all 0 here. The BIP16 is a checkout field with 2 bytes.

**Table 1**

| Function type (01Hex) | Reserved (all 00Hex) | LSP Trail Termination Source Identifier | Padding (all 00Hex) | BIP16 |
|---|---|---|---|---|
| 1 octet | 3 octets | 20 octets | 18 octets | 2 octets |

When the data packets are transmitted on the LSP, CV message is inserted at ingress and checked at an egress at a rate of 1/second. If the egress does not receive the CV message in 3 continuous seconds (3 times of a transmission period), it is considered that a connectivity fault happens on the LSP.

This fault may trigger an alarm and inform the ingress. One existing method adopts a BDI (Backward Fault Indicator) message to inform the ingress. The format of the BDI message is as shown in Table 2 where the Function type represents the type of the OAM with 1 byte. For the BDI message, the value of the Function type is 03 (hex). The Reserved is a reserved field with 1 byte which is all 0 here. The fault type represents a fault type with 2 bytes. The TTSI represents an ingress identifier of the LSP with 20 bytes which are optional and are all 0 when it is not in use. The fault location represents a fault location with 4 bytes. The Padding is for padding use with 14 bytes which are all 0 here. The BIP16 is a checkout field with 2 bytes. The described BDI may be sent to the ingress via a return path. This return path may be a dedicated LSP, or a shared LSP, or a non-MPLS return path.

**Table 2**

| Function type (03Hex) | Reserved (00Hex) | Fault type | TTSI (optional) | Fault location | Padding (all 00Hex) | BIP16 |
|---|---|---|---|---|---|---|
| 1 octet | 1 octet | 2 octets | 20 octets | 4 octets | 14 octets | 2 octets |

After receiving an alarm indication, the ingress of the failed LSP may start a diagnosis mechanism to perform fault localization by sequentially sending fault localization messages to the expected diagnosing point along the same path as data packets. The node, which receives the fault localization message, will respond with a response message if the node is the expected diagnosing point. Within a certain period, if the ingress does not receive the response message from the expected node, it is considered that the fault happens between the previous responding node and this node.

What is described above is the mechanism for the existing MPLS unicast fault localization. The existing standard does not include the mechanism of OAM (Operation, Administration and Maintenance) for Multicast MPLS networks yet. The IETF (Internet Engineering Task Force) simply expands the mechanism of MPLS unicast OAM for the multicast. Because an OAM message is needed to pass through the same path with the data for performing OAM for the data plane, in accordance with the characteristics of multicast, a large quantity of OAM message may be generated resulting in resource waste on one hand. On the other hand, some of the OAM messages may be unnecessary and may result in network congestion.

### SUMMARY

An embodiment of the present invention provides a node, method and system of fault localization in multicast MPLS networks to solve the problem of fault localization in multicast MPLS networks.

The embodiments of the present invention are implemented by the following technical solutions.

An embodiment of the present invention provides a method for fault localization of the multicast MPLS networks. The method includes:
sending, by a root node, a message to a leaf node and checking the connectivity of a multicast path and judging, by the leaf nodes, according to the said message whether there exists a connectivity fault on the branch where the leaf node is located;
generating and sending a fault localization message carrying the information of the fault branch after the root node learns which branch is in fault in accordance with the judgment result of the leaf node; and receiving a fault localization response message sent by the leaf node which matches with the information of the fault branch; and
performing, by the root node, fault localization in accordance with the received fault localization response message; if no fault localization response message is received from the node which is expected to generate a reply within a certain time period, judging that the fault happens between the node which is expected to generate the reply and a previous fault localization replying node.

An embodiment of the present invention provides a system for fault localization in the multicast MPLS networks. The system includes:
a root node adapted to send a message, learn the branch where a fault is located, generate and send a fault localization message carrying the information of the fault branch, and locate the fault in accordance with the received fault localization response message sent by a matched node;
a leaf node adapted to receive the message and fault localization message sent by the root node; judge whether a fault happens on the branch where the leaf node is located in accordance with the message, send a judgment result to the root node; judge whether the leaf node matches with the information of the fault branch in accordance with the received fault localization message carrying the information of the fault branch, and send the fault localization response message to the root node if the leaf node matches with the information of the fault branch.

An embodiment of the present invention provides a root node in Multi-Protocol Label Switching (MPLS) multicast, including:
a connectivity checking module adapted to send a message to leaf nodes checking the connectivity and continuity of the multicast path and receive a judgment result acquired by a leaf node judging whether there exists a connectivity fault on the branch where the leaf node is located;
a root node learning module adapted to receive the judgment result sent by the leaf node, generate and send a fault localization message carrying the information of the fault branch after learning the branch where the fault is located in accordance with the judgment result; and
a fault localization module adapted to perform fault localization and judge that the fault happens between a previous fault localization reply node and the node expected to generate a reply if no fault localization response message of the node expected to generate a reply is received within a certain time period.

An embodiment of the present invention provides a leaf node in Multi-Protocol Label Switching (MPLS) multicast, including:
a fault judging unit adapted to judge whether a message is received within a certain time period; no fault happening on the branch where the leaf node is located if the message is received; otherwise, a fault happening on the branch where the leaf node is located;
an alarm indication unit adapted to receive the judgment result of the fault judging unit; generate an alarm indication message carrying an identifier of the leaf node when a fault is judged to happen; and inform a root node via the return path; and
a node reply module adapted to receive the fault localization message, judge whether the leaf node matches with the information of the fault branch and send the fault localization response message to the root node if the leaf node matches with the information of the fault branch.

It can be seen from the above mentioned technical solutions provided by the embodiment of the present invention that the embodiment of the present invention restrains unnecessary messages (for example, the first method restrains the number of the response messages; the second method restrains the number of the sent fault localization messages) by carrying the information of the fault branch into the fault localization message, reduces redundant information, and improves the network efficiency.

In addition, a method of sending the fault localization message generated by the root node does not greatly modify the existing multicast mechanism so that it does not influence the transparent forwarding of the data packets; therefore, the mechanism may be implemented simply.

Although another method of sending the fault localization message generated by the root node modifies the multicast mechanism, it may directly restrain the fault localization message from being sent to all branches, instead it is controlled only to be sent to the fault branch so that it restrains unnecessary message more effectively.

### BRIEF DESCRIPTION OF THE DRAWINGS

Fig.1 is a flowchart illustrating the connectivity fault detecting in multicast MPLS networks in accordance with an embodiment of the present invention;

Fig.2 is a flowchart illustrating the method for fault localization in multicast MPLS networks in accordance with embodiment 1 of the present invention;

Fig.3 is a flowchart illustrating the method for fault localization in multicast MPLS networks in accordance with embodiment 2 of the present invention;

Fig.4 is a flowchart illustrating the method for fault localization in multicast MPLS networks in accordance with embodiment 3 of the present invention;

Fig.5 is a flowchart illustrating the method for fault localization in multicast MPLS networks in accordance with embodiment 4 of the present invention;

Fig.6 is a schematic diagram illustrating the method for fault localization in multicast MPLS networks in accordance with a specific example 1 of the present invention;

Fig.7 is a schematic diagram illustrating the method for fault localization in multicast MPLS networks in accordance with a specific example 2 of the present invention;

Fig.8 is a schematic diagram illustrating the system for fault localization in multicast MPLS networks in accordance with an embodiment of the present invention.

### DETAILED DESCRIPTION

The present invention will be described in more detail with reference to the drawings and specific embodiments which are not intended to limit the present invention.

The present invention embodiment provides a method and a system for fault localization of Multicast MPLS networks. The precondition of the method and system is that the root node in multicast needs to know the topology information of multicast. The multicast may be a multicast tree. This root node may be the root node of the multicast tree and may also be the root node of the sub-tree of the multicast tree. The topology information may be location relation and identifiers of the multicast members and so on and may also be the maintenance administration configuration information of the node.

In addition, the node mentioned in the embodiment of the present invention is not limited to a node on the multicast path. The node may also be a port supporting the administration maintenance function on the node. For simplifying the description, a node is taken as an example.

The method for fault localization at least includes the following two steps:

Connectivity verification is performed for the multicast LSP. A leaf node judges whether there exists a fault at the branch thereof.

If the leaf node judges that a fault happens at the branch thereof, the leaf node generates an alarm indication message to inform the root node, where the alarm indication message carries the identifier of the leaf node.

After the root node receives the alarm instruction message, the root node learns the branch where the fault happens in accordance with the identifier of the leaf node in the message. The root node starts a fault localization mechanism, sends a fault localization message, and carries the information of the fault branch into the fault localization message so as to implement fault localization only for the fault branch. The mentioned "branch" refers to a path from the root node to a leaf node.

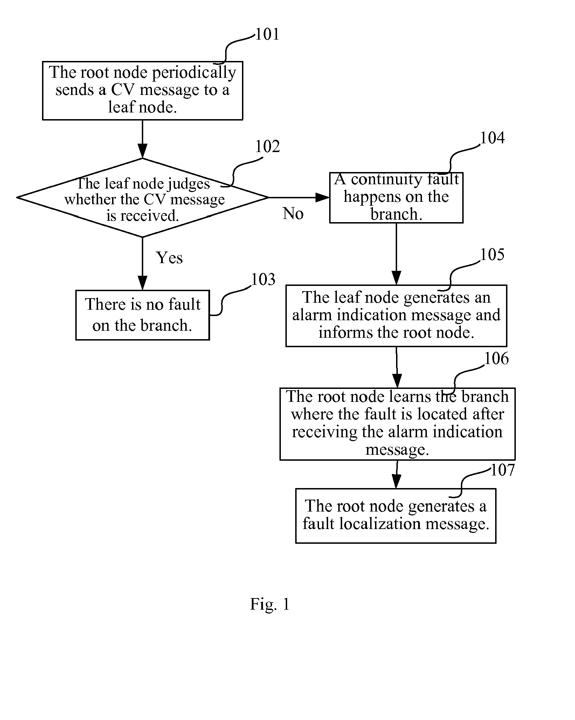

As shown in Fig. 1, the leaf node learns whether there exists a fault at the branch where the leaf node is located and informs the root node of fault information. The root node judges the branch where the fault is located and generates a fault localization message accordingly. The specific process includes the following steps:

Step 101: the root node periodically sends a connectivity verification message to the leaf node. The connectivity verification message is forwarded along the same path with a data packet.

Step 102: the leaf node judges whether the connectivity verification message is received within a certain time period.

The mentioned "a certain time period" may be 3 times of the transmission period of the connectivity verification message. The specific time period is configured by the system in accordance with experience.

Step 103: if the leaf node receives the connectivity verification message within the above time period, no connectivity fault happens at the branch where the leaf node is located.

Step 104: if the leaf node does not receive the connectivity verification message within the above time period, a connectivity fault happens at the branch where the leaf node is located.

Step 105: the leaf node generates an alarm indication message and informs the root node via a return path. The alarm indication message carries a leaf node identifier.

The mentioned return path may be a dedicated LSP, or a shared LSP, or a non-MPLS path. The alarm indication message carries the leaf node identifier for facilitating the root node to judge which branch a fault happens on. The identifier of the leaf node in Multicast LSP is adapted to identify a unique leaf node, which may be an IP address, or a similar TTSI in Table 1 jointly represented by an LSP identifier and an LSR identifier, or configured manually or by other methods, and may also be identifiers of a port supporting the administration maintenance function and so on.

Step 106: after the root node receives the alarm indication message returned by the leaf node and learns the branch where the fault is located in accordance with the leaf node identifier carried in the alarm indication message.

The root node may, in accordance with the topology information of the multicast LSP (e.g. a multicast LSP established through RSVP-TE or configured by a network administrator), get the information of each branch such as via which intermediate nodes the each branch reaches the leaf node and the sequence of these nodes, or the maintenance information of configuration and so on. Therefore, the root node may acquire the specific information of the branch where the fault is located according to the leaf identifier contained in the alarm indication message.

Step 107: after the root node learns the specific branch where the fault happens in accordance with the leaf node identifier, the root node generates a fault localization message and carries the information of the branch where the fault is located into the fault localization message.

The information of the fault branch may include the following two aspects:

1 ) the node information of the response fault localization message on the fault branch adapted to control the response message;

2) the topology information of the fault branch, that is, the location relation of all the nodes on the path of the fault branch, which is adapted to control the forwarding of the fault localization message. This information may be a node identifier, a configured maintenance node identifier, and sequence and so on. The mentioned identifier may be an IP address, or a similar TTSI mentioned in Table 1, which is jointly represented by an LSP identifier and an LSR identifier or configured manually or by other methods, and may also be an identifier of administration maintenance functions and so on.

The above mentioned two aspects of information of the fault branch may be freely selected or combined as required.

The method for locating a specific fault location for the fault branch includes the steps:

The first method: the fault localization message is sent along the forwarding path of the data packets as usual. However, the node is controlled to respond the fault localization message only when the node matches with the information of the fault branch carried in the fault localization message. The mentioned information of the fault branch at least includes the information of the nodes which are expected to respond with a fault localization response messages.

The embodiment 1 of the first method is as follows:

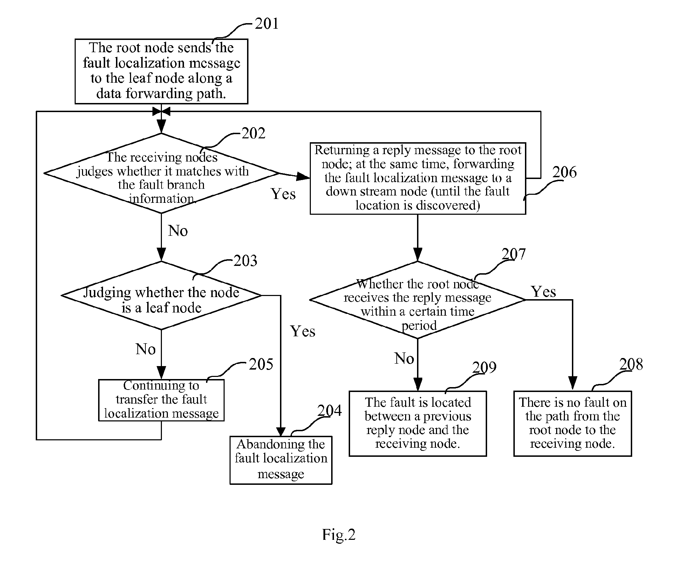

As shown in Fig. 2, in the present embodiment, the fault localization message is sent along the forwarding path of the data packets to the leaf node, that is, one copy of the fault localization message is straightly sent to the leaf node from the root node via the intermediate node. The specific steps are as follows:

Step 201: after the root node generates the fault localization message, the root node sends the message along the data forwarding path (multicast path) to the leaf node.

All the nodes supporting fault localization function on the forwarding path may receive the message in sequence and perform the following processing. However, there is no need for all the nodes on the forwarding path to support the fault localization function. The so-called support fault localization function is the ability to capture and process fault localization message.

Step 202: after a receiving node receives the fault localization message, the receiving node learns the information of the fault branch carried in the fault localization message. The receiving node judges whether it matches with the information of the fault branch.

The mentioned information of the fault branch is actually information of a series of nodes which are expected to respond with the fault localization response message on the fault branch.

Step 203: when the node does not match with the information of the fault branch, the node does not generate a fault localization response message and judges whether the node is a leaf node.

Step 204: if the node is a leaf node, the fault localization message is abandoned.

Step 205: if the node is not a leaf node, the fault localization message is directly forwarded downstream. After the node supporting the fault localization function downstream receives the fault localization message, the step 202 is executed.

Step 206: when the node matches with the information of the fault branch, a fault localization response message is returned to the root node and the fault localization message continues to be forwarded to a downstream node until a fault location is discovered.

Step 207: whether the root node receives the fault localization response message of the node expected to generate respond within a certain time period.

Step 208: when the root node receives the fault localization response message, the root node knows that there is no fault at the path between the receiving node and it.

Step 209: when the root node does not receive the fault localization response message, it is judged that a fault happens between a previous reply node and the receiving node.

If the above mentioned node indicates a port supporting the administration maintenance function on the node, when the root node does not receive the fault localization response message, it is judged a fault happens between a previous reply port and the receive port. Because a fault is likely to happen in a node and one of the two ports of the node does not send the fault localization response message within a time period, the fault may be located inside the node.

The embodiment 2 of the first method is as follows:

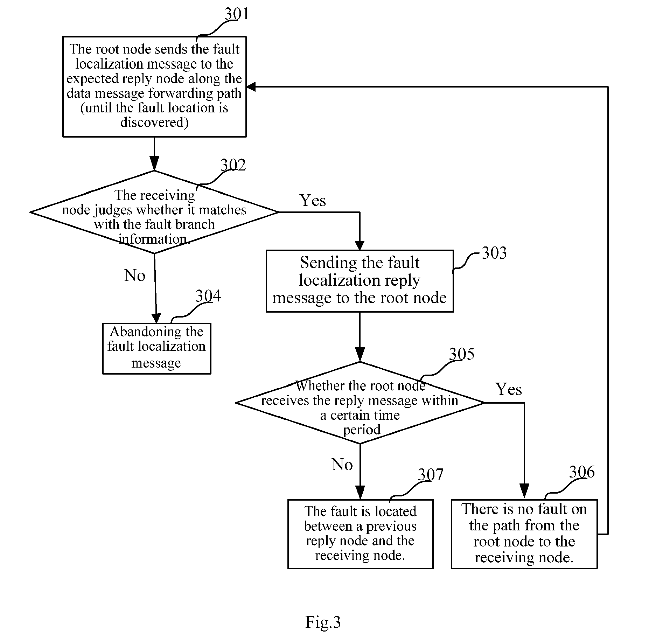

As shown in Fig.3, the root node of the present embodiment controls the fault localization message to be sent to the expected replying nodes in sequence along the same multicast path for data forwarding. For a different reply node, the root node sends a different fault localization message. Because in this way the fault localization message is sent to each expected node in sequence, it is only needed to carry the information of the node expected to return a reply into the fault localization message every time.

The specific step is as follows:

Step 301: after the root node generates the fault localization message, the root node sends the message along the data forwarding path and controls the message to reach the expected reply node. For example, a Time to Live TTL (located in the MPLS message header) of the message is used. The TTL is decremented by 1 every time the message passes a node on the forwarding path. When TTL becomes a preset value (e.g. 1 or 0) by decrementing, the node is considered as the receiving node of the fault localization message.

Step 302: after the receiving node receives the fault localization message, the receiving node resolves the information of the fault branch carried in the fault localization message and judges whether the receiving node matches, that is, whether the receiving node is the expected reply node.

The mentioned information of the fault branch is the node information expected to be replied. Referring to different reply nodes, the fault localization messages are different, that is, the reply nodes carrying the information of the fault branch are different.

Step 303: when the node matches with the information of the fault branch, a fault localization response message is returned to the root node. The root node sends a fault localization message to the next expected node according to the sequence. The above step is repeated until a fault location is discovered.

Step 304: when the node does not match with the information of the fault branch, no fault localization response message is generated and the message is abandoned.

Step 305 to step 307 are the steps that the root node judges the specific location where the fault happens through the received fault localization response message, which are the same as step 207 to step 209. Unnecessary details will not be described here.

In the above mentioned first method, the fault localization message is sent along the forwarding path of the data packets. The node receiving the message compares the information of the fault branch carried in the fault localization message and will respond with a fault localization response message only when the node matches with the information of the fault branch. Therefore, unnecessary fault localization response messages may be reduced. The method may be simply implemented. It is only needed that the information of the reply node is carried in the information of the fault branch instead of modifying the existing forwarding mechanism.

The second method: controlling the fault localization message only to be sent to the fault branch.

The method may be implemented by acquiring the next-hop information through the information of the fault branch carried in the fault localization message. The mentioned information of the fault branch not only needs to include the information of node which is expected to respond with the fault localization message for controlling the response message, but also needs to include the topology (every passed node and the location relation thereof) of the fault branch, which is adapted to control the forwarding of the fault localization message.

The second method is described as embodiment 3 as follows:

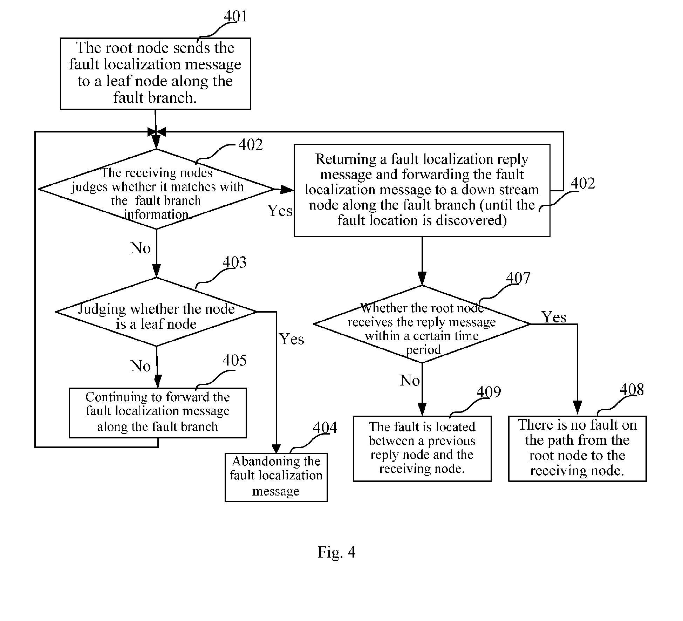

As shown in Fig.4, the root node in the present embodiment only sends one copy of the fault localization message to the leaf node along the fault branch. The specific steps are as follows:

Step 401: after the root node generates the fault localization message, the root node acquires the next-hop information in accordance with the information of the fault branch, combines the FEC and the next-hop information as a index, looks up a forwarding table, and sends the fault localization message only to the next node of the branch where the fault is located.

The information of the fault branch carried in the fault localization message includes the information of nodes which are expected to respond and the topology information of the fault branch. The node expected to respond needs to support the fault localization function. However, there is no need for all the nodes on the forwarding path to support the fault localization function.

Step 402: after the receiving node receives the fault localization message, the receiving node judges whether it matches with the reply node information carried in the fault localization message. If the receiving node matches with the reply node information, step 406 is executed; otherwise step 403 is executed.

Step 403: if the receiving node does not match with the reply node information carried in the fault localization message, the receiving node is judged whether it is a leaf node. If the receiving node is a leaf node, step 404 is executed, that is, the fault localization message is abandoned; otherwise, step 405 is executed, that is, the fault localization message continues to be forwarded along the fault branch.

Step 404: the fault localization message is abandoned.

Step 405: the fault localization message continues to be forwarded along the fault branch.

Step 406: if the receiving node matches with the reply node information carried in the fault localization message, the node sends the fault localization response message to the root node. At the same time, the node acquires the next hop information of the fault branch in accordance with the topology information of the fault branch carried in the message. The next hop information is combined into a label as an index together. The node looks up the forwarding table and sends the fault localization message only to the next node of the fault branch until a fault location is discovered.

The topology information of the fault branch carried in the fault localization message may help the note receiving fault localization message judge the next hop information of the fault branch.

The Next Hop Label Forwarding Entry (NHLFE) of the MPLS includes the information needed by the forwarding such as an out port, next hop information, and label operation. Currently, the forwarding of the MPLS message mainly takes an in label as the index (in the situation of ingress, take forwarding the equivalence class FEC as the index). The out port and the label operation information are acquired by looking up the NHLFE to forward the message.

As shown in Table 3, one example of NHLFE is provided. Supposing the label of an input message is 11, in accordance with the information of the fault branch, the next hop (for example C) is acquired. In accordance with the label 11 and the next hop C, it can be seen by looking up the table that the following processing needs to be performed to the message: removing the original label, adding a label 13, and at the same time sending it to the out port p1 so as to send the message only to the fault branch.

**Table 3**

| In label/FEC | NHLFE | | | |
|---|---|---|---|---|
| | Next hop | Out port | label operation | Other |
| 11 | B | p0 | Remove original label; | ... |
| | | | Add label 12 | |
| | C | p1 | Remove the original label; | ... |
| | | | Add label 13 | |
| | D | p2 | Remove the original label; | ... |
| | | | Add label 14 | |

In order to control the message forwarding, the in-label and the next hop information may be combined jointly as an index to ensure that the fault localization message is only sent to the fault branch.

Step 407 to step 409 are that the root node judges the specific location where the fault happens according to the received response message, which are the same as step 207 to step 209. Unnecessary details will not be described here.

Another embodiment of the second type method is described as embodiment 4.

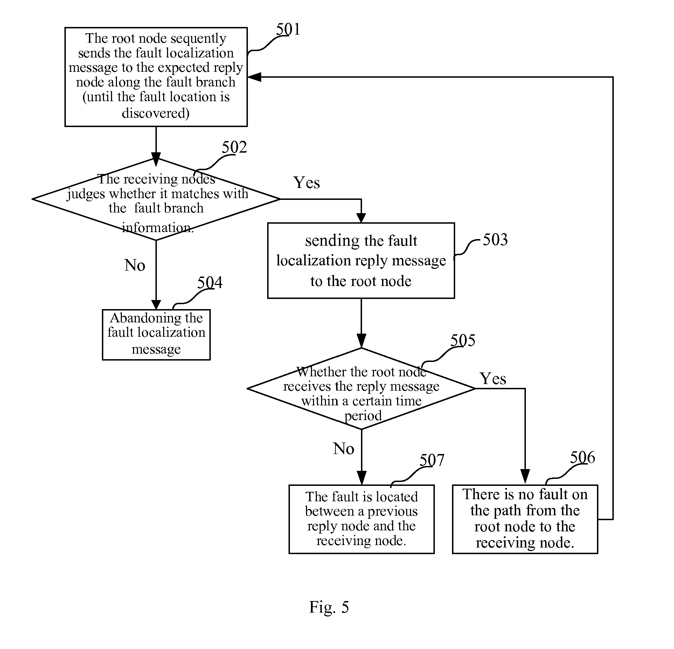

As shown in Fig. 5, the root node of the present embodiment controls the fault localization message to be sent to the node expected to generate a reply in sequence along the fault branch. For a different expected node, the root node sends a different fault localization message.

The specific steps are as follows:

Step 501: after the root node generates the fault localization message, the root node only sends the fault localization message to the node expected to generate a reply on the fault branch.

The method for controlling the message to arrive at the expected node on the fault branch is the same as step 301.

The method for controlling the message to be sent only to the fault branch is the same as the relevant part of the step 401 and 406, that is, for the root node, the FEC and the next hop information are combined as the index for looking up the forwarding table to ensure that the message is only sent to the fault branch. For the intermediate node, the in label and the next hop information are combined as the index for looking up the forwarding table to ensure that the message is only sent to the fault branch.

The steps 502 to 507 are the same as the step 302 to step 307. Unnecessary details will not be described here.

In the above mentioned second type method, the root node makes the fault localization message only be sent to the fault branch through a certain mechanism. This method may further reduce useless information taking up network resource. However, the method modifies the existing forwarding mechanism. This type of method not only needs to carry the information of the reply node into the information of the fault branch, but also needs to carry the topology information of the fault branch for controlling and forwarding the fault localization message.

Example 1

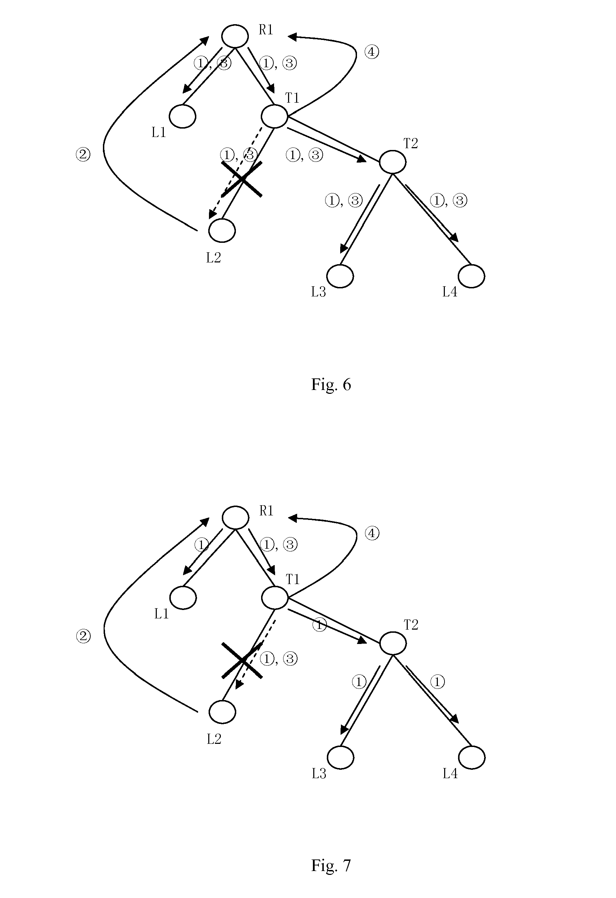

As shown in Fig. 6, it is a schematic diagram illustrating performing the fault localization to one branch of the P2MP (Point to Multi Point) LSP based on the first method. For simplifying the description, only a node is taken as an example. The situation of the port supporting the administration maintenance function on the node may be analogized.

The R1 represents the identifier of the root node. The L1, L2, L3 and L4 represent the identifier of the leaf node respectively. The T1 and T2 represent the identifier of the intermediate transmission node respectively. □ represents a connectivity verification message. □ represents a backward fault alarm indication message. □ represents a fault localization message. □ represents a fault localization response message. By combing the above mentioned steps, the specific description is as follows:

The root node R1 periodically (e.g. 1/second) sends the connectivity verification message (i.e. the message represented by □ in Fig. 6; the message format may reference Table 1) to all the leaf nodes L1, L2, L3 and L4. The sending path passes the same path with the data forwarding.

Because a fault happens on the link between the intermediate node T1 and the leaf node L2, the L2 may not be able to receive the connectivity verification message sent by the root node within a designated time period (e.g. 3 times of the period of the connectivity verification message). Therefore, the L2 considers that a connectivity fault happens on the branch<R1, T1, L2> where it is located.

The L2 generates a backward fault alarm indication message (i.e. the message represented by □ in Fig.6) and informs the root node R1. The message may adopt the BDI message format shown in Table 2. However, it is needed to carry the identifier of the leaf node L2 into the message. The identifier may be put in the Padding field.

The root node R1 knows that the fault happens on the branch<R1, T1, L2> in accordance with the identifier. Reply node information is carried in the generated fault localization message (the message represented by □ in Fig.6).

Two following ways may be adopted to send the fault localization message:

One way is that the root node sends one copy of the fault localization message to all the leaf nodes along the data forwarding path. The fault localization message is identified at every receiving node. For example, a special identifier may be used to distinguish from data packets. The node is judged whether it matches with the reply node information carried in the fault localization message to determine whether to respond to the message.

As shown in Fig.6, supposing every node of the fault branch respond, the branch reply node information<T1, L2> may be carried in the fault localization message. The identifier of the root node is omitted.

After the L1 receives the fault localization message, the L1 finds out that it does not belong to <T1, L2> and itself is a leaf node. So it abandons the message.

After the T1 receives the message, the T1 finds out that it belongs to<T1, L2>. The T1 generates a fault localization response message (the message represented by □ in the Fig.6; the message format is pending) and returns the fault localization response message to the root node R1. At the same time, the T1 continues to forward the fault localization message to the downstream T2 and L2. The root node receives the response message from the T1 within a certain time period and considers that there is no fault on the path from the root node R1 to the intermediate node T1.

Because a fault happens between the T1 link and the L2 link, the fault localization message may not be able to arrive at L2. The L2 may not generate a fault localization response message. The root node does not receive the fault localization response message of the L2 within a certain time period and may judge that the fault happens between the T1 and the L2.

After the intermediate node T2 receives the fault localization message, the T2 finds out that it does not belong to<T1,L2> and does not respond. The T2 continues to forward the fault localization message only to the downstream node.

The processing for the leaf node L3 and the L4 to receive the fault localization message is the same as the L1.

Another way is that the root node controls the fault localization message to be sent to the expected node in sequence along the multicast path of the data forwarding. For a different expected node, the root node sends a different fault localization message, that is, the expected reply node information is different.

As shown in Fig.6, supposing every node of the fault branch (T1 and L2) respond, the node controls the fault localization message to be sent to the expected node in a TTL degressive way. When TTL=1, it indicates a receiving node of the fault localization message.

The fault localization message sent by the root node R1 at the first time includes the information of the reply node T1. The TTL of the message header is configured to be 2.

When the message achieves the T1 and the L1, TTL=1, and here only T1 matches with the reply node information, the T1 returns the fault localization response message (message represented by □ in Fig.6) to the root. The root node receives the fault localization response message from the T1 within a certain time period and considers that there is no fault on the path from the root node R1 to the intermediate node T1.

The L1 does not match with the reply node information. Therefore, the fault localization message is abandoned.

The fault localization message sent by the root node R1 sequentially includes the information of the reply node L2. The TTL of the message header is set to be 3.

When the message arrives at the L2 and the T2, TTL=1, and the T2 does not match with the reply node information, no reply is made and the message is silently abandoned.

In accordance with the characteristic of the multicast, the L1 may still receive the fault localization message. However, because the L1 does not belong to the fault branch, the message is silently abandoned. The L2 matches with the reply node information. However, because a fault happens between the T1 link and the L2 link, the fault localization message may not arrive at the L2. The L2 may not generate the fault localization response message. If the root node does not receive the fault localization response message of the L2 within a certain time period, the root node may judge that a fault happens between the T1 and the L2.

In accordance with the above mentioned steps, it may be implemented that the locating is further performed for the fault branch on the multicast LSP.

Example 2

As shown in Fig.7, it is a schematic diagram for illustrating performing the fault localization for one branch of the P2MP LSP based on the second type method.

The R1 represents the identifier of the root node. The L1, L2, L3 and L4 represent the identifier of the leaf node respectively. The T1, T2 represents the identifier of the intermediate transmission node respectively. □ represents the connectivity verification message. □ represents the backward fault alarm indication message. □ represents the fault localization message. □ represents the fault localization response message.

The process of connectivity detection and fault alarm is the same as the first method. Unnecessary details will not be described here. The difference of the process and the method lies in that the fault localization message is sent to all the branches or to the fault branch only.

In this type of method, the fault localization message is only sent to the fault branch. Other branches with fault does not receive this message, that is, the fault localization for the multicast LSP is transformed to be a fault localization similar to unicast by controlling the forwarding of the fault localization message.

Similarly, two ways may be adopted to send the fault localization message. The fault localization message carries the information of the fault branch. The fault localization message is a message as shown in □ in Fig.7. The specific description is provided accompanying the Fig.7 as follows.

Supposing the root node has acquired the information of the fault branch in accordance with the leaf information in the backward fault alarm indication message. The information of the fault branch includes the topology information of the fault branch and so on. The information of the fault branch is represented by <T1 (1), L2 (2)> and the root node identifier is omitted. The number in parentheses represents the sequence of the node, that is, the message is transmitted to the leaf L2 from the root R1 along the branch in sequence passing the T1, L2. Supposing all the nodes passed respond.

One way is that the root node sends the fault localization message along the fault branch to the leaf node, that is, the root node only sends one copy of the fault localization message.

For example, the root node R1, in accordance with the information of the fault branch <T1(1),L2(2)>, judges that the next hop node is T1. Therefore, the root node R1 controls the fault localization message (message represented by □ in Fig.7) only to be sent to the T1 (located on the fault branch). The T1 generates the fault localization response message (message represented by □ in Fig.7) and returns it to the root node. At the same time, in accordance with the information of the fault branch <T1(1),L2(2)>, the fault localization message continues to be forwarded to the next hop node L2. The method for controlling the fault localization message only to be sent to the fault branch is the same as the above.

Supposing the relation between the NHLFE and the FEC maintained by the root node R1 is as shown in Table 4:

**Table 4**

| In label/FEC | NHLFE | | | |
|---|---|---|---|---|
| | next hop | Out port | Label operation | Other |
| FEC1 | L1 | p0 | Remove the original label; | ... |
| | | | Add the label 11 | |
| | T1 | p1 | Remove the original label; | ... |
| | | | Add the label 12 | |

It can be seen by looking up the table in accordance with FEC1 and the next hop T1 that the fault localization message removes the original label, is added with a label L2, and is sent to the port p1 of the root node so as to ensure the fault localization message only to be sent to the fault branch.

Similarly, supposing the relation between the in label maintained by the intermediate node T1 and the NHLFE is as shown in Table 5:

**Table 5**

| In label/FEC | NHLFE | | | |
|---|---|---|---|---|
| | Next hop | Out port | Label operation | Other |
| l2 | L2 | p0 | Remove the original label; | ... |
| | | | Add the label 13 | |
| | T2 | p1 | Remove the original label; | ... |
| | | | Add the label 14 | |

It can be seen by looking up the table in accordance with the in label 12 and the next hop L2 that the fault localization message removes the original label, is added with a label L3, and is sent to the port p0 of the intermediate node T1 so as to ensure the fault localization message only to be sent to the fault branch.

The root node receives the fault localization response message from the T1 within a certain time period and considers that there is no fault on the path from the root node R1 to the intermediate node T1.

Because a fault happens between the T1 link and the L2 link, the fault localization message may not be able to arrive at L2. No fault localization response message may be generated by L2. The root node does not receive the fault localization response message of the L2 within a certain time period and may judge that a fault happens between the T1 and the L2.

Another way is that the root node controls the fault localization message to be sent in sequence along the fault branch to the node expected to generate a reply. For a different node expected to generate a reply, the root node sends a different fault localization message, that is, the expected reply node information is different.

For example, the root node R1 firstly controls the fault localization message (message represented by □ in Fig.7) only to be sent on the fault branch to the T1 (the method for controlling fault localization message only to be sent to the fault branch through the next hop information is the same as the above; the method for controlling the message to be sent to the T1 through the TTL is the same as the above). The T1 generates a fault localization response message (message represented by □ in Fig.7) and returns it to the root node.

The root node receives the response message from the T1 within a certain time period and considers that there is no fault on the path from the root node R1 to the intermediate node T1. The root node R1 continues to send the fault localization message to the L2. However, because a fault happens between the T1 link and the L2 link, the fault localization message may not be able to arrive at L2. The L2 may not generate a response message. The root node does not receive the response message of the L2 within a certain time period and may judge that a fault happens between the T1 and the L2.

In accordance with the above mentioned steps, it may be implemented that the locating is further performed for the fault branch on the multicast LSP.

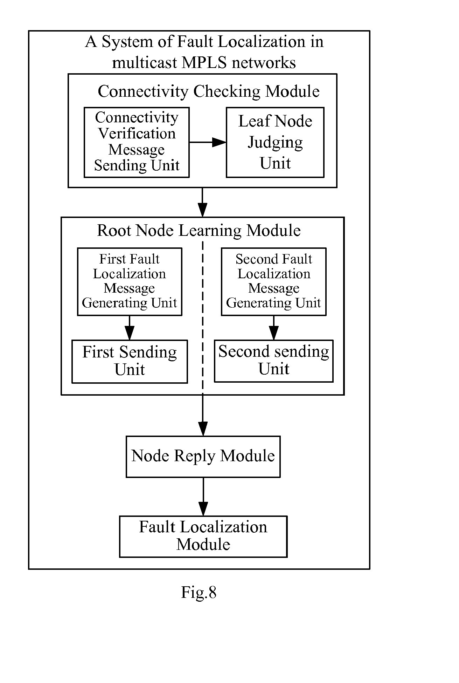

As shown in Fig.8, the embodiment of the present invention also provides a system for fault localization of Multicast MPLS networks. The system includes following modules:

A connectivity checking module is adapted for the root node to send the connectivity verification message to the leaf node, check the connectivity of the multicast path. The leaf node judges whether there exists a connectivity fault on the branch where the leaf node is located in accordance with the connectivity verification message and sends the judgment result to the root node.

A root node learning module is adapted for the root node to generate and send a fault localization message in accordance with the judgment result of the leaf node after learning the branch where the fault is located. The fault localization message carries the information of the fault branch.

A node reply module is adapted for the node receiving the fault localization message to judge whether the node matches with the information of the fault branch. If the node matches with the information of the fault branch, the node sends the fault localization response message to the root node.

A fault localization module is adapted to judge that the fault happens between the previous fault localization reply node and the node expected to generate a reply if the root node does not receive the fault localization response message of the node expected to generate a reply within a certain time period.

The connectivity checking module specifically includes following units:

A connectivity verification message sending unit is adapted for the root node to periodically send the connectivity verification message to the leaf node along the data forwarding path.

A leaf node judging unit is adapted for the leaf node to judge whether a connectivity verification message is received within a certain time period. If the connectivity verification message is received, it can be determined that there is no fault on the branch where the leaf node is located; otherwise, it can be determined that a fault appears on the branch where the leaf node is located. An alarm indication message is generated and the root node is informed via a return path. The alarm indication message carries the identifier of the leaf node.

A root node learning module specifically includes following units:

A first fault localization message generating unit is adapted to generate the fault localization message after the root node learns the branch where the fault is located in accordance with the judgment result of the leaf node. The fault localization message carries the information of the reply node.

A first sending unit is adapted for the root node to forward the fault localization message along the multicast forwarding path of the data packets.

The first sending unit specifically adopts that the root node sends the fault localization message to the leaf node along the multicast data packets forwarding path, or the root node independently sends the fault localization message to each reply node along the multicast data packets forwarding path in sequence.

Alternatively, the root node learning module specifically includes the following units:

A second fault localization message generating unit is adapted for generating a fault localization message after the root node learns that the branch where the fault is located in accordance with the judgment result of the leaf node. The fault localization message carries the information of the reply node and the topology information of the fault branch.

A second sending unit is adapted for the root node to send the fault localization message to the nodes of the branch where the fault is located in accordance with the topology information of the fault branch.

The second sending unit specifically adopts that the root node sends the fault localization message to the leaf node along the fault branch, or the root node independently sends the fault localization message to each reply node in sequence along the fault branch.

In addition, the node in system may also be a port supporting fault administration maintenance on the node. If the node is a port supporting administration maintenance function on the node, when the root node does not receive the fault localization response message, the fault is located between a previous reply port and the receiving port. Because the fault is likely to happen in one node, one of two ports of the node does not send the fault localization response message within a time period, the fault is located in the node.

Though illustration and description of the present disclosure have been given with reference to preferred embodiments thereof, it should be appreciated by persons of ordinary skill in the art that various changes in forms and details can be made without deviation from the spirit and scope of this disclosure, which are defined by the appended claims.

## Claims

1. A method of fault localization in multicast multi-protocol label switching (MPLS) networks, comprising:
sending, by a root node, a message to a leaf node, checking the connectivity of a multicast path, and receiving a judgment result acquired by the leaf node judging whether there exists a connectivity fault on the branch where the leaf node is located;
generating and sending a fault localization message carrying the information of a fault branch after the root node learns the branch where the fault is located and receiving a fault localization response message sent by the leaf node matched with the information of the fault branch; and
performing, by the root node, fault localization in accordance with the received fault localization response message; if no fault localization response message of a node expected to generate a reply is received within a certain time period, judging that the fault happens between the node expected to generate the reply and a previous fault localization reply node.

2. The method according to claim 1, wherein the procedure of sending, by the root node, a message for checking the connectivity of a multicast path to the leaf node, and receiving the judgment result acquired by judging by the leaf node whether there exists a connectivity fault on the branch where the leaf node is located specifically comprises:
sending, by the root node, the message to the leaf node periodically along a data forwarding path;
no fault happening on the branch where the leaf node is located if the message is received by the leaf node within a certain time period; otherwise, a fault happening on the branch where the leaf node in located and receiving, by the root node, an alarm indication message, carrying an identifier of the leaf node, generated by the leaf node.

3. The method according to claim 1, wherein the procedure of generating and sending the fault localization message after the root node learns the branch where the fault is located specifically comprises:
learning, by the root node, the branch where the fault is located in accordance with the judgment result of the leaf node; generating the fault localization message carrying the information of the reply node; and
forwarding, by the root node, the fault localization message along the multicast forwarding path of the data packets.

4. The method according to claim 1, wherein the procedure of generating and sending the fault localization message after the root node learns the branch where the fault is located specifically comprises:
learning, by the root node, the branch where the fault is located in accordance with the judgment result of the leaf node; generating the fault localization message carrying the information of the reply node; and
sending, by the root node, the fault localization message in sequence and independently to every reply node along the multicast data packets forwarding path.

5. The method according to claim 1, wherein the procedure of generating and sending the fault localization message after the root node learns the branch where the fault is located specifically comprises:
generating the fault localization message carrying the information of the reply node and the topology information of the fault branch with after the root node learns the branch where the fault is located in accordance with the judgment result of the leaf node; and
sending, by the root node, the fault localization message to the node of the branch where the fault is located in accordance with the topology information of the fault branch.

6. The method according to claim 5, wherein the sending the fault localization message to the node of the branch where the fault is located comprises:
sending, by the root node, the fault localization message to the leaf node along the fault branch; or sending, by the root node, the fault localization message in sequence and independently to every reply node along the fault branch.

7. The method according to any one of claims 1-6, wherein the node is a port supporting fault administration maintenance on the node.

8. A system of fault localization in multicast multi-protocol label switching (MPLS) networks, comprising:
a root node adapted to send a message, learn the branch where a fault is located, generate and send a fault localization message carrying the information of the fault branch, and locate the fault in accordance with the received fault localization response message sent by a matched leaf node;
a leaf node adapted to receive the message and fault localization message sent by the root node, judge whether a fault happens on the branch where the leaf node is located in accordance with the message, send a judgment result to the root node, judge whether the leaf node matches with the information of the fault branch in accordance with the received fault localization message carrying the information of the fault branch, and send the fault localization response message to the root node if the leaf node matches with the information of the fault branch with defect.

9. A root node in multicast multi-protocol label switching (MPLS) networks, comprising:
a connectivity checking module adapted to send the connectivity of a message checking multicast path to a leaf node and receive a judgment result acquired by a leaf node judging whether there exists a connectivity fault on the branch where the leaf node is located;
a root node learning module adapted to receive the judgment result sent by the leaf node, generate and send a fault localization message carrying the information of the fault branch after learning the branch where the fault is located in accordance with the judgment result; and
a fault localization module adapted to perform fault localization and judge that the fault happens between a previous fault localization reply node and a node expected to generate a reply if no fault localization response message of the node expected to generate a reply is received within a certain time period.

10. The root node according to claim 9, wherein the connectivity checking module specifically comprises:
a message sending unit adapted to periodically send the message to the leaf node along the data forwarding path.

11. The root node according to claim 9, wherein the root node learning module specifically comprises:
a first fault localization message generating unit adapted to generate the fault localization message carrying the information of the fault branch after learning the branch where the fault is located in accordance with the judgment result of the leaf node; and
a first sending unit adapted to forward the fault localization message.

12. The root node according to claim 11, wherein the first sending unit sends the fault localization message to the leaf node along the multicast data packets forwarding path, or sends the fault localization message to every reply node in sequence and independently along the multicast data packets forwarding path.

13. The root node according to claim 9, wherein the root node learning module specifically comprises:
a second fault localization message generating unit adapted to generate the fault localization message carrying the information of the fault branch and the topology information of the fault branch after learning the branch where the fault is located in accordance with the judgment result of the leaf node; and
a second sending unit adapted to send the fault localization message to the node of the branch where the fault is located in accordance with the topology information of the fault branch.

14. The root node according to claim 13, wherein the second sending unit sends the fault localization message to the leaf node along the fault branch, or sends the fault localization message to every reply node in sequence and independently along the fault branch.

15. A leaf node in multicast multi-protocol label switching (MPLS) networks, comprising:
a fault judging unit adapted to judge whether a message is received within a certain time period; no fault happening on the branch where the leaf node is located if the message is received; otherwise, a fault happening on the branch where the leaf node is located;
an alarm indication unit adapted to receive the judgment result of the fault judging unit; generate an alarm indication message carrying an identifier of the leaf node when a fault is judged to happen; and inform a root node via the return path; and
a node reply module adapted to receive the fault localization message, judge whether the leaf node matches with the information of the fault branch, and send the fault localization response message to the root node if the leaf node matches with the information of the fault branch.
